## Europäisches Patentamt

## European Patent Office

## Office européen des brevets

(11) Veröffentlichungsnummer: **0 192 914**
**B1**

(12) # EUROPÄISCHE PATENTSCHRIFT

(45) Veröffentlichungstag der Patentschrift:
**27.04.88**

(51) Int. Cl.⁴: **F 16 B 13/10**

(21) Anmeldenummer: **85810596.8**

(22) Anmeldetag: **16.12.85**

(54) Spreizdübel.

(30) Priorität: **27.02.85 DE 3506841**

(43) Veröffentlichungstag der Anmeldung:
**03.09.86 Patentblatt 86/36**

(45) Bekanntmachung des Hinweises auf die Patenterteilung:
**27.04.88 Patentblatt 88/17**

(84) Benannte Vertragsstaaten:
**AT BE CH DE FR GB IT LI NL SE**

(56) Entgegenhaltungen:
**DE-A-2 155 054**
**DE-A-2 533 223**
**DE-A-2 927 373**
**FR-A-2 352 979**
**US-A-1 469 669**

(73) Patentinhaber: **HILTI Aktiengesellschaft, FL- 9494 Schaan (LI)**

(72) Erfinder: **Herb, Armin, Lärchenstrasse 9, D-8123 Peissenberg (DE)**
Erfinder: **Huegel, Robert, Eichendorfstrasse 9, D-8912 Kaufering (DE)**
Erfinder: **Luethi, Rudolf, Neueneggstrasse 15, CH- 3172 Niederwangen (CH)**

(74) Vertreter: **Wildi, Roland, Hilti Aktiengesellschaft Patentabteilung, FL- 9494 Schaan (LI)**

EP 0 192 914 B1

## Beschreibung

Die Erfindung betrifft einen Spreizdübel mit Spreizelement und aus Blech gerollter Spreizhülse, wobei die Längskanten der Spreizhülse im rückwärtigen, ein Gewinde zum Lastangriff aufweisenden Bereich eine Stossfuge und im vorderen, der Verankerung dienenden Bereich eine sich verengende Aussparung für das Spreizelement bilden.

Spreizdübel mit einer aus Blech gerollten Spreizhülse zeichnen sich im besonderen durch kostengünstige Herstellung aus. Ein Spreizdübel (beschriebenen in der nicht vorveröffentlichten EP-A-188 173) dieser Art ist einteilig hergestellt, wobei an die Spreizhülse ein keilförmiges Spreizelement durch einen Verbindungssteg angeformt ist, der bei Einleitung des Spreizvorganges durchtrennbar ist. Das Spreizelement wird sodann in eine sich nach vorne dh in Setzrichtung keilförmig verengende Aussparung in der Wandung der Spreizhülse vorgetrieben.

Für den nach dem Setzen des Spreizdübels erfolgenden Lastangriff ist im rückwärtigen Bereich der Spreizhülse ein Gewinde vorgesehen, das beispielsweise vor dem Rollen der Spreizhülse durch Prägen aufgebracht wird.

Beim Rollen der Spreizhülse besteht die Gefahr, dass die Gewindegänge an der sich bildenden Stossfuge eine Versetzung in Achsrichtung der Spreizhülse erfahren. Dies ist für das Einbringen eines Schraubbolzens in das Gewinde zumindest hinderlich. Ein weiteres problem des bekannten Dübels besteht darin, dass unter Lastangriff des Schraubbolzens die radial von innen auf die Spreizhülse wirkenden Kräfte ein Weiten der letzteren bewirken, sofern die den Spreizdübel aufnehmende Bohrung im Durchmesser ein Übermass besitzt oder das Aufnahmematerial weich und damit zu nachgiebig ist. Zur Unterbindung dieses Problems wurde auch schon versucht, die aneinandergrenzenden, die Stossfuge bildenden Längskanten der Spreizhülse durch Löten oder Schweissen miteinander zu verbinden. Dies führt allerdings dazu, dass beim Auftreten der voran beschriebenen Versetzung der Gewindegänge diese Versetzung fixiert wird. Das Eindrehen eines Schraubbolzens in das Gewinde der Spreizhülse wird dadurch behindert.

Der Erfindung liegt die Aufgabe zugrunde, einen Spreizdübel mit aus Blech gerollter, ein Gewinde zum Lastangriff aufweisender Spreizhülse zu schaffen, wobei die Gewindegänge sowohl an der Stossfuge zuverlässig versetzungsfrei verlaufen als auch in allen Anwendungsfällen ausreichenden Halt für den Lastangriff schaffen.

Erfindungsgemäss wird die Aufgabe dadurch gelöst, dass die die Stossfuge bildenden Längskanten der Spreizhülse paarweise ineinandergreifende Lappen und Ausnehmungen aufweisen.

Beim Rollen der Spreizhülse greift jeweils ein Lappen in eine diesem gegenüberliegende Ausnehmung ein. Dieses Zusammenwirken von Lappen und Ausnehmungen gewährleistet eine definierte axiale Positionierung der Längskanten zueinander. Während vorzugsweise mehrere Lappen und Ausnehmungen entlang der Längskanten vorgesehen sind, ist es auch möglich, nur einen Lappen und eine zugehörige Ausnehmung anzuordnen. Ein Weiten der Spreizhülse unter Lastangriff lässt sich unterbinden, indem nach dem Eingriff der Lappen in die Ausnehmungen die Längskanten durch Schweissen oder Löten miteinander verbunden werden.

Mit Vorteil ist die lichte Weite der Ausnehmungen im Mündungsbereich geringer als im Grundbereich. Die geringe lichte Weite der Ausnehmungen übernimmt so die praktisch spielfreie Führung der Lappen in Achsrichtung der Spreizhülse. Die Lappen können entweder in Umfangsrichtung der Spreizhülse in die Ausnehmungen eingefahren oder beim Rollvorgang radial in die Ausnehmungen eingelenkt werden. Durch anschliessendes Kalibrieren der die Lappen und Ausnehmungen aufweisenden Zone der Spreizhülse wird die Grösse der Lappen erweitert, so dass diese in hintergreifenden Eingriff mit den Ausnehmungen treten. Dieser hintergreifende Eingriff unterbindet ein Weiten der Spreizhülse bei Lastangriff. Auf ein Verbinden durch Schweissen oder Löten kann somit verzichtet werden.

Nach einem weiteren Vorschlag der Erfindung ist die Breite der Lappen im freien Endbereich grösser als im wurzelbereich. Auch bei dieser Ausführungsform lässt sich nach dem Rollvorgang durch Kalibrieren ein in Umfangsrichtung belastbarer Hintergriff zwischen den Ausnehmungen und den Lappen erzielen. Ein Weiten der Spreizhülse wird auch so unterbunden.

Um bereits durch den Rollvorgang einen in Umfangsrichtung belastbaren Hintergriff zwischen Lappen und Ausnehmungen zu erreichen, übersteigt vorzugsweise die Breite der Lappen im freien Endbereich die lichte Weite der Ausnehmungen im Mündungsbereich. Die Lappen werden diesfalls beim Rollvorgang radial in die Ausnehmungen eingelenkt. Durch anschliessendes Kalibrieren der die Lappen und Ausnehmungen tragenden Zone lässt sich allfälliges Spiel zwischen den Konturen der Lappen und Ausnehmungen eliminieren. Auf diese Weise wird eine auch in radialer Richtung der Spreizhülse sichere Verbindung zwischen den Randzonen der Lappen und Ausnehmungen erreicht.

Die Seitenkonturen der Lappen und Ausnehmungen können sowohl einen stufenlosen als auch einen stufigen Verlauf aufweisen. Um eine besonders hohe Belastbarkeit der Spreizhülse in Umfangsrichtung zu erreichen, verlaufen die Seitenkonturen der Lappen und der Ausnehmungen zweckmässig zueinander symmetrisch. So wird ein zweiseitiges gleichmässiges Abstützen der Lappen in den Ausnehmungen erzielt.

Nach einem weiteren Vorschlag der Erfindung weisen die Lappen in ihrem mittleren Bereich eine geringere Länge und die Ausnehmungen in ihrem mittleren Bereich eine geringere Tiefe auf. Durch diese Formgebung wird erreicht, dass beim in Umfangsrichtung erfolgenden Einfahren der Lappen in die Ausnehmungen die Stirnseite der Lappen mittig am Bereich der Ausnehmung mit geringerer Tiefe aufläuft und so die Lappen zu den Seitenkonturen der Ausnehmungen hin verformt werden. Dieserart lässt sich insbesonder ein Verbindung mit nachträglichem Kalibrieren eine gute hintergreifende Verbindung schaffen.

In Weiterbildung der Erfindung weist die Spreizhülse in der Zone der Lappen und Ausnehmungen eine auf den Nenndurchmesser des Gewindes erweiterte Innenkontur auf. Die besagte Zone ist so also gewindefrei, was insbesondere Herstellungsvorteile bringt. Das Kalibrieren kann so in der Weise erfolgen, dass die Spreizhülse innenseitig sich mit der gewindefreien Zone an einem Amboss abstützt und auf die Spreizhülse aussenseitig ein Kalibrierstempel einwirkt. Dieserart lassen sich besonders kurze Taktzeiten bei der Herstellung erzielen.

Die Erfindung wird nachstehend anhand von Zeichnungen, die Ausführungsbeispiele wiedergeben, näher erläutert. Es zeigen:

Fig. 1 einen Spreizdübel in Ansicht;

Fig. 2 einen Spreizdübel nach Fig. 1 im Längsschnitt, gemäss Schnittverlauf II-II in Fig. 1;

Fig. 3 eine gegenüber der Fig. 1 etwas vergrösserte Ansicht einer weiteren Ausführungsform eines hinteren Dübelabschnittes vor Beendigung des Rollvorganges;

Fig. 4 einen Grundriss des Dübels nach Fig. 3;

Fig. 5 einen Grundriss des Dübels nach Fig. 3, nach abgeschlossenem Rollvorgang;

Fig. 6 eine weitere Ausführungsform entsprechend der Ansicht nach Fig. 3;

Fig. 7 einen Grundriss des Dübels nach Fig. 6;

Fig. 8 eine Ansicht des Dübels nach Fig. 6, nach abgeschlossenem Rollvorgang;

Fig. 9 einen Grundriss des Dübels nach Fig. 8;

Fig 10 eine Ansicht des Dübels nach Fig. 8, kalibriert;

Fig. 11 einen Grundriss des Dübels nach Fig. 10 mit Kalibrierwerkzeug;

Fig. 12 eine weitere Ausführungsform, entsprechendder Ansicht nach Fig. 8;

Fig. 13 einen vergrösserten Detail-Schnitt, entsprechend Schnittverlauf XIII-XIII in Fig. 12;

Fig. 14 den Dübel nach Fig. 12, in verschweisster Ausführung;

Fig. 15 einen vergrösserten Detail-Schnitt, entsprechend Schnittverlauf XV-XV in Fig. 14.

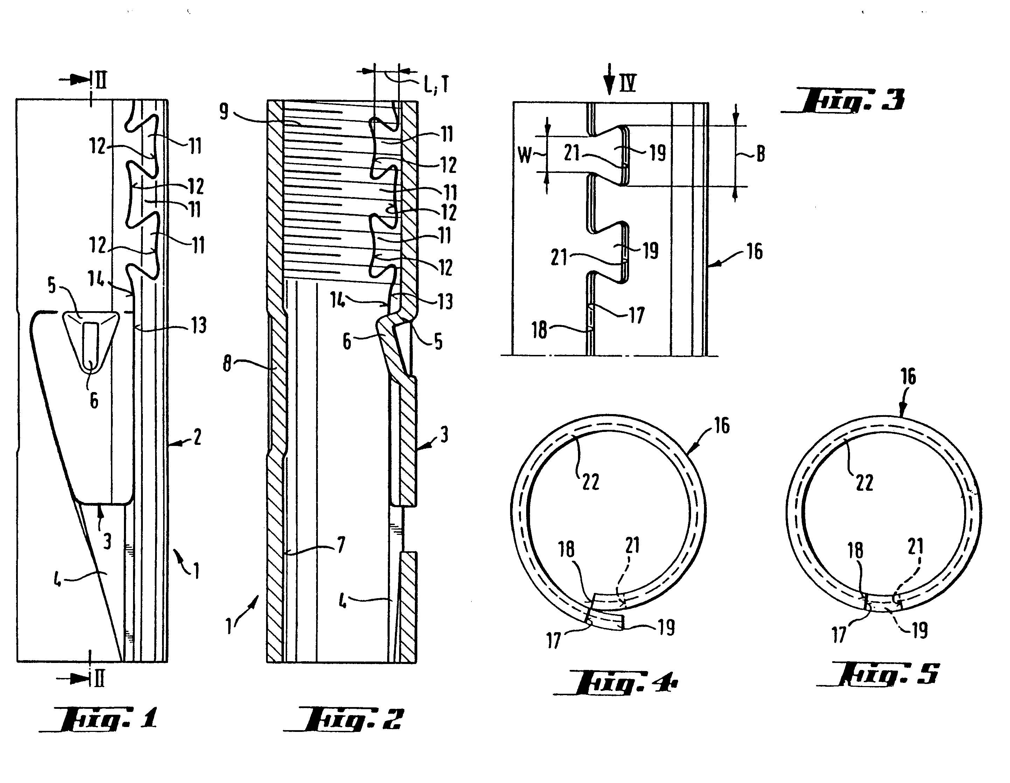

Der in Fig. 1 dargestellte, insgesamt mit 1 bezeichnete Spreizdübel besteht im wesentlichen aus einer insgesamt mit 2 bezeichneten Spreizhülse und einem insgesamt mit 3 bezeichneten keilförmigen Spreizelement.

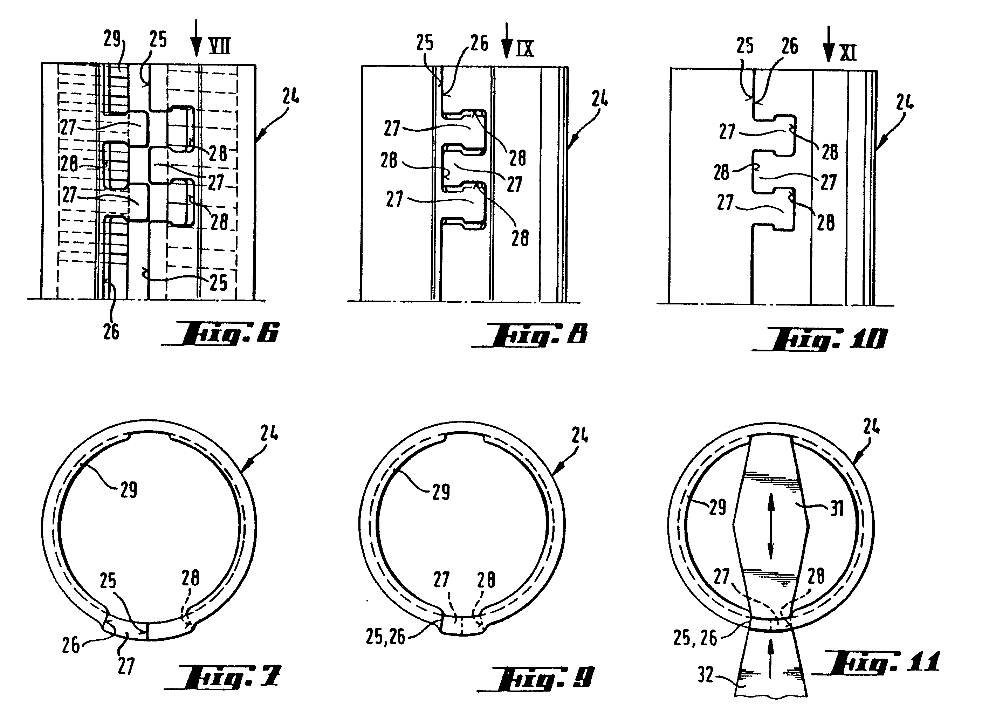

Das Spreizelement 3 sitzt in einer nach vorne, dh in Setzrichtung sich verjüngenden Aussparung 4 der Spreizhülse 2. Wie die Fig. 2 verdeutlicht, ist das Spreizelement 3 hinterseitig über einen durchtrennbaren Verbindungssteg 5 an die Spreizhülse 2 angeformt. Das Spreizelement 3 weist einen Vorsprung 6 auf, der in die Zentralbohrung 7 der Spreizhülse 2 ragt. Gegenüberliegend zum Spreizelement 3 ist an der Spreizhülse 2 eine Führungsleiste 8 für ein Setzwerkzeug angeformt.

Zum Setzen des Spreizdübels 1 wird dieser in eine Bohrung eines Aufnahmematerials eingeführt und anschliessend ein beispielsweise bolzenförmiges Setzwerkzeug in die Zentralbohrung 7 vorgetrieben. Das Setzwerkzeug läuft dabei am Vorsprung 6 auf und durchtrennt vorerst den Verbindungssteg 5, um alsdann über den Vorsprung 6 das Spreizelement 3 in der Aussparung 4 nach vorne zu verschieben. Durch Keilwirkung kommt es so zu einem Verspreizen der Spreizhülse 2 in der Bohrung.

Nach dem Entnehmen des Setzwerkzeugs wird zum Festlegen eines zu befestigenden Gutes ein Schraubenbolzen in ein hinterseitiges Gewinde 9 eingedreht. Die beim Spannen des Schraubbolzens im Gewindebereich auf die Spreizhülse 2 nach aussen wirkenden Radialkräfte führen dank des hintergreifenden Zusammenwirkens von Lappen 11 und Ausnehmungen 12 nicht zu einem weiten der aus Blech gerollten Spreizhülse 2. Die Lappen 11 und die Ausnehmungen 12 sind entlang der eine Stossfuge bildenden Längskanten 13, 14 der Spreizhülse 2 angeordnet und weisen zueinander symmetrische Seitenkonturen auf. In ihrem mittleren Bereich weisen die Lappen 11 eine verkürzte Länge L und die Ausnehmungen 12 eine geringere Tiefe T auf.

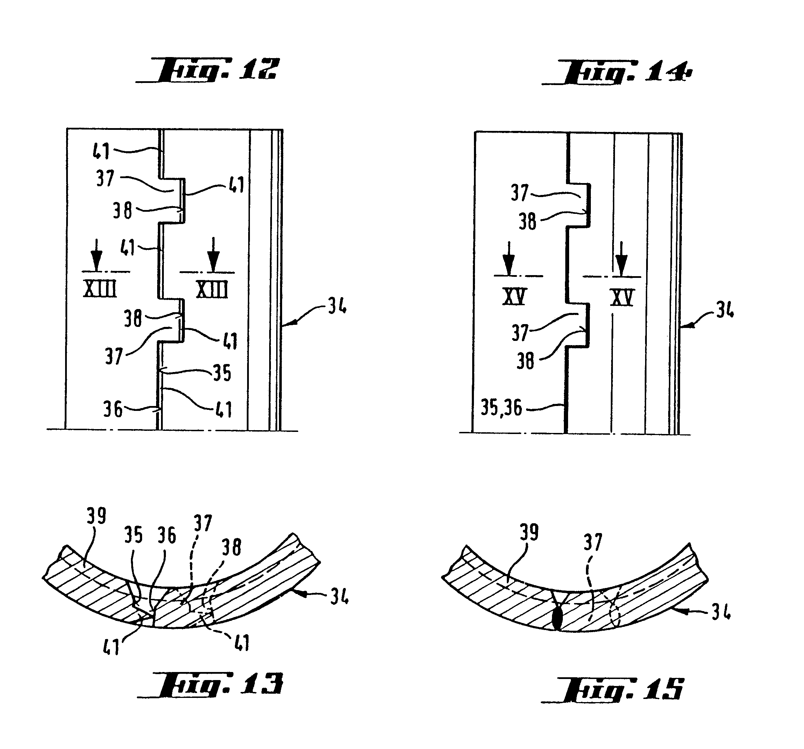

Der in Fig. 3 teilweise dargestellte Dübel verfügt beispielsweise über denselben Spreizmechanismus wie in Fig. 1 und 2 gezeigt. Die hier erkennbare, insgesamt mit 16 bezeichnete Spreizhülse weist entlang von Längskanten 17, 18 wechselweise angeordnet symmetrische Lappen 19 und Ausnehmungen 21 auf. Die lichte Weite W der Ausnehmungen 21 ist kleiner als die Breite B im abragenden Endbereich der Lappen 19. Dadurch wird unter radialem Einlenken der Lappen 19 in die Ausnehmungen 21, wie in den Fig. 4 und 5 gezeigt, beim Rollvorgang eine hintergreifende, in Umfangsrichtung belastbare Verbindung geschaffen. Das Eindrehen eines Schraubbolzens in ein auch hier vorhandenes Gewinde 22 führt demnach nicht zu einem Weiten der Spreizhülse 16.

Die Fig. 6 zeigt eine noch nicht vollständig gerollte, insgesamt mit 24 bezeichnete Spreizhülse. Entlang von Längskanten 25, 26 sind stufig und symmetrisch ausgebildete Lappen 27 und Ausnehmungen 28 angeordnet. Die mit den Lappen 27 und Ausnehmungen 28 versehene Zone der Spreizhülse 24 ist um die Höhe der Gänge eines Gewindes 29, wie der Fig. 7 entnehmbar, radial nach aussen geprägt. Die besagte Zone weist demnach keine Gewindegänge auf.

Da die Breite der Lappen 27 etwa der lichten Weite der Ausnehmuhgen 28 entspricht, können die Lappen unter Vollendung des Rollvorganges in Umfangsrichtung der Spreizhülse 24 in die Ausnehmungen eingefahren werden, wie dies den Fig. 8 und 9 zu entnehmen ist. Durch anschliessendes Kalibrieren, wobei ein Amboss 31 an der gewindefreien Zone angreift und aussenseitig ein Kalibrierstempel 32 auf die Spreizhülse 24 einwirkt, werden die Lappen 27 vergrössert und füllen die Ausnehmungen 28 sohin vollständig aus. Die Fig. 10 und 11 zeigen die auf diese Weise fertig bearbeitete Spreizhülse 24.

Die Fig. 12 zeigt eine fertig gerollte, insgesamt mit 34 bezeichnete Spreizhülse. Entlang von Längskanten 35, 36 sind wiederum wechselweise Lappen 37 und Ausnehmungen 38 angeordnet. Innenseitig ist die Spreizhülse 34 wiederum mit einem Gewinde 39 versehen (Fig. 13). Entlang der einen Längskante 35 und der daran angeordneten Lappen 37 ist ein im Querschnitt dreieckiger Steg 41 angeformt, der mit der anderen Längskante 36 und den korrespondierenden Ausnehmungen 38 in Berührungskontakt steht. Am Ende des Rollvorganges der Spreizhülse 34 laufen die Lappen 37 in die Ausnehmungen 38 ein und gewährleisten so einen kontinuierlichen Übergang der Gewindegänge an der Stoßstelle. Nach dem Röllvorgang wird im Impulsschweissverfahren unter Schmelzung des Steges 41 die Längskante 35 mit der Längskante 36 verbunden. Die Fig. 14, 15 zeigen die verschweisste und in Umfangsrichtung belastbare Spreizhülse 34.

Bei allen Ausführungsformen wird das Gewinde 9, 22, 29, 39 vor dem Rollvorgang geprägt, was eine besonders einfache, zeit- und kostensparende Herstellmethode darstellt.

## Patentansprüche

1. Spreizdübel mit Spreizelement und aus Blech gerollter Spreizhülse, wobei die Längskanten der Spreizhülse im rückwärtigen, ein Gewinde zum Lastangriff aufweisenden Bereich eine Stossfuge und im vorderen, der Verankerung dienenden Bereich eine sich verengende Aussparung für das Spreizelement bilden, dadurch gekennzeichnet , dass die die Stossfuge bildenden Längskanten (13, 14; 17, 18; 25, 26; 35, 36) der Spreizhülse (2, 16, 24, 34) paarweise ineinandergreifende Lappen (11, 19, 27, 37) und Ausnehmungen (12, 21, 28, 38) aufweisen.

2. Spreizdübel nach Anspruch 1, dadurch gekennzeichnet, dass die lichte Weite (W) der Ausnehmungen (12, 21, 28) im Mündungsbereich geringer als im Grundbereich ist.

3. Spreizdübel nach Anspruch 1 oder 2, dadurch gekennzeichnet, dass die Breite (B) der Lappen (11, 19, 27) im freien Endbereich grösser als im Wurzelbereich ist.

4. Spreizdübel nach einem der Ansprüche 1 bis 3, dadurch gekennzeichnet, dass die Breite (B) der Lappen (11, 19) im freien Endbereich die lichte Weite (W) der Ausnehmungen (12, 21) im Mündungsbereich übersteigt.

5. Spreizdübel nach einem der Ansprüche 1 bis 4, dadurch gekennzeichnet, dass die Seitenkonturen der Lappen (11, 19, 27, 37) und Ausnehmungen (12, 21, 28, 38) zueinander symmetrisch verlaufen.

6. Spreizdübel nach einem der Ansprüche 1 bis 5, dadurch gekennzeichnet, dass die Lappen (11) in ihrem mittleren Bereich eine geringere Länge (L) und die Ausnehmungen (12) in ihrem mittleren Bereich eine geringere Tiefe (T) aufweisen.

7. Spreizdübel nach einem der Ansprüche 1 bis 6, dadurch gekennzeichnet, dass die Spreizhülse (24) in der Zone der Lappen (27) und Ausnehmungen (28) eine auf den Nenndurchmesser des Gewindes (29) erweiterte Innenkontur aufweist.

## Claims

1. An expansible dowel comprising an expansion element, and an expansible sleeve which is rolled from sheet metal, in which respect the longitudinal edges of the expansible sleeve in the rearward region having a thread for the load application form a butt joint and in the front region serving for the anchorage form a narrowing cutout for the expansion element, characterised in that the longitudinal edges (13, 14; 17, 18; 25, 26; 35, 36) of the expansible sleeve (2, 16, 24, 34) which form the butt joint have lugs (11, 19, 27, 37) and recesses (12, 21, 28, 38) intermeshing in pairs.

2. An expansible dowel according to claim 1, characterised in that the clear width (W) of the recesses (12, 21, 28) in the mouth region is less than in the base region.

3. An expansible dowel according to claim 1 or 2, characterised in that the width (B) of the lugs (11, 19, 27) in the free end region is greater than in the root region.

4. An expansible dowel according to any one of claims 1 to 3, characterised in that the width (B) of the lugs (11, 19) in the free end region exceeds the clear width (W) of the recesses (12, 21) in the mouth region.

5. An expansible dowel according to any one of claims 1 to 4, characterised in that the lateral contours of the lugs (11, 19, 27, 37) and recesses (12, 21, 28, 38) extend symmetrically to one another.

6. An expansible dowel according to any one of claims 1 to 5, characterised in that the lugs (11) have in their central region a lesser length (L) and the recesses (12) have in their central region a lesser depth (T).

7. An expansible dowel according to any one of claims 1 to 6, characterised in that the expansible sleeve (24) in the zone of the lugs (27) and recesses (28) has an inner contour widened to the nominal diameter of the thread (29).

**Revendications**

1. Cheville expansible avec un élélment d'écartement et une douille d'expansion roulée en tôle, les arêtes longitudinales de la douille d'expansion constituant un joint dans la région postérieure munie d'un filetage pour l'application de la charge, et un évidement avec rétrécissement pour l'élément d'écartement, dans la région antérieure servant à l'ancrage, caractérisée en ce les arêtes longitudinales (13, 14; 17, 18; 25, 26: 35, 36) de la douille d'expansion (2, 16, 24, 34) formant le joint présentent des languettes (11, 19, 27, 37) et des évidements (12, 21, 28, 38) coopérant par paires.

2. Cheville expansible selon la revendication 1, caractérisée en ce que la largeur intérieure (W) des évidements (12, 21, 28) est plus faible dans la région de l'ouverture qu'au fond.

3. Cheville expansible selon l'une des revendications 1 ou 2, caractérisée en ce que la largeur (B) des languettes (11, 19, 27) est plus grande dans la région de l'extrémité libre que dans la région de la racine.

4. Cheville expansible selon l'une quelconque des revendications 1 à 3, caractérisée en ce que la largeur (B) des languettes (11, 19) dans la région de l'extrémité libre dépasse la largeur intérieure (W) des évidements (12, 21) dans la région de l'ouverture.

5. Cheville expansible selon l'une quelconque des revendications 1 à 4, caractérisée en ce que les contours latéraux des languettes (11, 19, 27, 37) et des évidements (12, 21, 28, 38) s'étendent symétriquement les uns par rapport aux autres.

6. Cheville expansible selon l'une quelconque des revendications 1 à 5, caractérisée en ce que les languettes (11) présentent dans leur région médiane une longueur (L) plus faible et que la profondeur (T) des évidements (12) est plus faible dans leur région médiane.

7. Cheville expansible selon l'une quelconque des revendications 1 à 6, caractérisée en ce que la douille d'expansion (24) présente, dans la zone des languettes (27) et des évidements (28), un contour intérieur élargi au diamètre nominal du filetage (29).

**Fig. 1**

**Fig. 2**

**Fig. 3**

**Fig. 4**

**Fig. 5**

0 192 914

Fig. 6    Fig. 8    Fig. 10
Fig. 7    Fig. 9    Fig. 11

**Fig. 14**

34
37 38 37 38
XV XV
35,36

**Fig. 15**

34
37
39

**Fig. 12**

34
41 41 41
XIII XIII 35
41 37 38 41 38 37 36

**Fig. 13**

34
37 38 41
35 36
39 35 41